# EUROPEAN PATENT SPECIFICATION

(11) **EP 2 203 531 B1**
(45) Date of publication and mention of the grant of the patent: **25.02.2015**
(21) Application number: 08782661.6
(22) Date of filing: 07.08.2008
(51) Int. Cl.: C09D 11/10

(54) **PACKAGING AND INK THEREFOR**
VERPACKUNG UND TINTE DAFÜR
EMBALLAGE ET ENCRE DESTINÉE À CET EFFET

(30) Priority: 14.08.2007 US 955732 P
(43) Date of publication of application: 07.07.2010
(73) Proprietor: Sun Chemical Corporation, Parsippany, NJ 07054-1285 (US)
(72) Inventor: MATHEW, Mathew, C., Bloomfield, NJ 07003 (US); ARCURIO, Ralph, F., Bridgewater, NJ 08807 (US); WILSON, Liam, Ford, Seabrook, NH 03874 (US); CZARNECKI, Richard, J., Wayne, NJ 07470 (US); MOSTOWY-GALLAGHER, Maura, Andover, NJ 07821 (US); SOMMER, Christopher, Matawan, NJ 07747 (US); ROSEN, Josie, M., Monroe, NY 10950 (US); BARRETO, Sonia, E., Belleville, NJ 07821 (US); SCHNEIDER, Mark, Dumont, NJ 07628 (US)
(74) Representative: Fletcher, Matthew James Edwin
(86) International application number: PCT/US2008/072471
(87) International publication number: WO 2009/023520

(56) References cited:
- WO-A-02/38643
- DATABASE WPI Week 200581 Thomson Scientific, London, GB; AN 2005-789345 XP002499969 & JP 2005 298618 A (TOYO INK MFG CO LTD) 27 October 2005 (2005-10-27)
- DATABASE WPI Week 199516 Thomson Scientific, London, GB; AN 1995-118382 XP002499970 & JP 07 040500 A (DAINIPPON INK & CHEM INC) 10 February 1995 (1995-02-10)
- DATABASE WPI Week 198546 Thomson Scientific, London, GB; AN 1985-287227 XP002499971 & JP 60 197779 A (HONEY CHEM IND CO LTD) 7 October 1985 (1985-10-07)
- DATABASE WPI Week 199613 Thomson Scientific, London, GB; AN 1996-124127 XP002499972 & JP 08 020621 A (MITSUBISHI CHEM CORP) 23 January 1996 (1996-01-23)
- DATABASE WPI Week 200417 Thomson Scientific, London, GB; AN 2004-171929 XP002499973 & JP 2003 206431 A (HITACHI KASEI POLYMER KK) 22 July 2003 (2003-07-22)
- DATABASE WPI Week 200437 Thomson Scientific, London, GB; AN 2004-394101 XP002499974 & JP 2004 083664 A (DAINICHISEIKA COLOR & CHEM MFG CO LTD) 18 March 2004 (2004-03-18)

## Description

### FIELD OF THE INVENTION:

The invention relates to a printed laminate material for packaging, and especially to a material that can be printed and then formed into a flexible container or retortable flexible pouch that can be sealed and then heated to a temperature to pasteurize or sterilize its contents while sufficiently maintaining the integrity of the printed laminate, and a printing ink therefor.

### BACKGROUND OF THE INVENTION:

In order to extend the shelf life of a food product, bacteria within the food must be eliminated. One common method for eliminating harmful bacteria in food products is by heating the food products to a temperature which is sufficient to kill the bacteria. For many years, food products were first sealed within metal cans and then the canned food was heated to a suitable temperature. After cooling, the canned food could be stored at room temperature for long periods of time.

Starting around the late 1960s, flexible retort pouches began to replace the metal cans for food packaging. Retort systems use steam or superheated water to cook the food in its own package, extending shelf life and ensuring food safety. Retort pouches offer a number of advantages for food processors including a 30-50% reduction in cooking time, which improves production efficiency and reduces energy use. The shorter cooking time can also result in an flavor improvement. In addition, empty retort pouches occupy significantly reduced storage space compared to empty metal cans and also offer major savings in freight cost.

The retort pouches come in a variety of shapes and sizes. The two most common shape forms can be described as flat or pillow shaped and gusset or stand-up shaped pouches. These pouches are considerably lighter and lower in cost than metal cans, and are considered to put less stress on the public waste stream treatment facilities. The typical flat or pillow pouch consists of one or two sheets of laminated material, the plies of which are held together by a retort lamination adhesive. The typical gusset or stand-up pouch is manufactured by using three sheets of laminated material, the plies of which are also held together by a retort lamination adhesive. Both types are closed by heat-sealing after filling. This process can be accomplished by using pre-made pouches, filling and sealing out of line, or by forming, filling and sealing inline.

In order to be used in a retort process, the flexible pouch must comply with a number of requirements. For example, the U.S. government Food and Drug Administration (FDA) has very specific regulations about the materials which can and cannot be used for flexible packages that will be subjected to temperatures over 250° F (ca 94.5° C). Specifically, 21 C.F.R. § 177.1390 regulates the chemical components that can be used to construct a flexible pouch that will be subjected to these extreme temperature environments. Not only must the physical properties of these flexible pouches (lamination bond strengths, heat seal strengths, WVTR (water vapor transmission rates), OTR (oxygen transmission rates), and burst analysis) exceed normal testing parameters, but also the liquid components used to adhere the films together, along with the films themselves, must comply with migratory testing guidelines established by the FDA. The pouch must remain airtight and bacteria-proof (hermetically sealed) after going through the normal retort process, which exposes the pouch to temperatures in the range of from 120° C to 130° C. for 30 to 80 minutes at a pressure of 3.0 to 5.0 bar. This temperature, pressure and time may be varied slightly depending on the pouch size and the contents within the pouch.

In most commercial applications, it is highly desirable to decorate the laminate with printed graphics. Solvent based, water based and energy curable printing inks may be utilized to decorate one or more layers of the laminate. For commercial applications other than retorting, the bond strength of the ink to the laminate ply (ASTM D 1876) is lower than 500g/2.54 cm. However, if a retort laminate is prepared with a non-retortable lamination ink and a retort adhesive and then subjected to retort conditions, the laminate strength deteriorates such that even if the initial bonds were at least 500g/2.54 cm, the resulting post-heat treatment bonds are less than 75% of the pre-heat treatment bond strength. However, the laminate needs to maintain at least 75% of the pre-heat treatment bonds or provide bonds which are stronger than the laminate plies in order to maintain the integrity of the pouch and to ensure that the contents are protected from air and bacteria. Further, as the bond strength of the ink to surface deteriorates, the integrity of the printed graphics themselves also deteriorates.

Traditionally, when preparing some types of packaging intended to be used to package food products, film is printed on one side, adhesive is applied on top of the printing as well as on the clear areas surrounding the printing, and then the film is laminated to a second film at a laminating nip. In in-line printing, the adhesive is coated on top of the freshly printed ink or the opposite web and immediately thereafter is laminated. In many cases, lamination is accomplished "out of line," meaning that a printed roll is taken to another location for lamination. The adhesive must bond to the ink as well as to the film without causing the ink to bleed, run, delaminate, decal or generate poor bond strength. Adhesives have been developed which do not dissolve (rewet) the dried ink beyond acceptable levels for some ink/substrate combinations but rewetting is a problem which must be considered when designing a retort system. This is because the variety of compositions of inks commonly used in flexible packaging is infinite. The primary binder materials used include polyurethane, acrylic, nitrocellulose, polyester, vinyl, etc, and the pigment systems can vary widely. Likewise, the films used in film lamination for food packaging are of an infinite variety since there are different film types, applications and manufacturers. For example, polyethylene can be high density, low density, linear low density, metallocene and can have various amounts of ethylene vinyl acetate (EVA) for better sealing properties. In addition, some polyethylenes are made to have high oxygen transmission. A further complication is that the surface properties differ depending on whether the films are cast, blown or oriented in one or two directions.

Some specialty inks for retort applications have been developed. For example, JP 05302050 describes a solvent based printing ink suitable for retort application in which the binder is a polyurethane resin having a number average molecular weight of 5,000 to 150,000 formed from a carbodiimide containing diisocyanate, polyol and chain expanding agent. This combination is said to avoid the problems of single liquid type printing compositions which cannot sufficiently stand processes that require resistance to high temperature such as retorting. In the case of water based systems, U.S. 4,851,459 and 4,883,694, while principally directed to adhesives, indicate that a polymer system for binders and inks is acceptable for retort purposes can be realized if the polymer is a polyurethane containing peroxy carbamyl groups rather than polyurethanes containing urea linkages. JP 3669002, 3386249 and 2577848 describe aqueous inks said to be suitable for retort applications which contain a binder containing aziridine, epoxy, oxazoline, carbodiimide or metal chelate entities. These specialty inks tend to be polyurethane based since conventional acrylic resin based inks do not have high extrusion or adhesive bond strength on the polyester films used to make retort packages. Even when these acrylic inks do have good adhesive bond strength on certain polyester films, they fail upon retorting. Polyurethane based inks give good adhesion to polyester films and in some cases give acceptable retort properties but they have poor resolubility and poor printability.

A specialty ink is described in WO 2007/006583 and said to be useful in flexo and gravure printing processes. The ink uses a solvent borne combination of a polyurethane having a weight average molecular weight of 4,000 to 25,000 g/mol, preferably non-film forming, and a polyurethane having a weight average molecular weight of 25,000 to 100,000 g/mol, preferably film forming, the polyurethanes preferably having a polymodal molecular weight distribution. The bond strengths disclosed for separating the laminate plies after the laminate was stored for 2 days at room temperature varied from about 310 to 1122 grams/2.54 cm. Some of these are sufficient for a retort package but no attempt to retort these laminates is described.

It has now been discovered that retort inks can be made using conventional polyurethane binders provided that the polyurethane and the colorant are selected such that the cured ink has a bond strength of at least 500 g/2.54 cm before retorting and retains at least 75% of this bond strength after retorting or provides destruct bonds after retorting. What is meant by destruct bonds are those which have a strength such that the substrate tears during the bond strength testing.

### SUMMARY OF THE INVENTION:

The present invention provides a method of preparing a retort ink as defined in claim 1, a method of preparing a printed laminate packaging material as defined in claim 7 and a method of preparing a retort package, such as a retortable pouch, comprising that printed laminate material as defined in claim 8. The laminate material includes two or more discreet layers, at least one of which is printed with a retort ink and adhesives are used to bond the discreet layers together. The printed retortable pouch is completed by heat sealing the edges of one or more sheets of the laminate so that they are welded together. The initial printing on the laminate uses a water based or solvent based ink which is a combination of binder and colorant which provides the ink with a bond strength of at least 500 grams/linear inch (2.54 cm). The printed pouch and its contents can then be pasteurized by heat-treatment. The heat-treated printing maintains at least 75%, preferably at least 100%, of the original non-treated laminate strength or Destruct bonds. The polyurethanes used in this invention are selected on the basis of their having an enthalpic relaxation endotherm of 0.6 Joules/gram or less after 3 days of aging at ambient temperature.

### DETAILED DESCRIPTION OF THE INVENTION:

The present invention provides a method of preparing new and improved retort inks as defined in claim 1. Such inks are capable of being used with suitable retort adhesives and films in a commercial retort package. Such retortable packages must maintain their material integrity as well as their required barrier properties during product-to-package handling, thermal processing and subsequent shipping and handling. In the case of shelf stable food packages, the flexible substrate used must be retortable and still maintain extended barrier characteristics.

Retort pouches are laminated structures designed to withstand thermal processing. The structures consist of a multi-ply laminate. Each layer to the laminate contributes to the required barrier properties. One (or more) layer constitutes the print surface on which the ink is printed, and usually provides the heat resistance for pouch sealing, thermal stability, and abuse resistance. Film options for the layers include, but are not limited to, oriented polyester, corona or chemically treated polymers, Biax oriented nylon, and polyethylene terephthalate (PET) which may be barrier coated (AlOx/SiOx). An adhesive is applied either to the surface carrying the ink or a secondary substrate or an inner film layer. The secondary substrate can serve as the high oxygen barrier offering thermal stability and flex crack resistance. Typical secondary substrates include but are not limited to aluminum foil, PET (AlOx/SiOx coated), or polyvinylidene chloride coated. The inner film layer can provide abuse resistance and heat resistance to maintain the seal during the retort. Cast polypropylene is usually the material of choice, but other flexible packaging materials may be used.

A typical commercial package will be printed with inks of various colors. In most instances to date, the primary colors have been magenta, cyan, yellow and black, which are considered the process colors and are usually printed as small dots. Additional colors, such as violet, green, and orange are usually printed as solids.

All layers in the retortable package are bonded together by either a solventless adhesive or a solvent based adhesive. These adhesives are usually based on two component materials that have the chemical composition of a polyol and an isocyanate and can be either aromatic or aliphatic. The blending ratio and percent solids applied are supplied by the manufacturer and are specific to each adhesive. Aromatic adhesives are typically used on the outside of foil functional barriers to prevent migration of the adhesives components. Aliphatic adhesives can be used inside of the functional barrier as well as with clear substrate packages. Typically, the dry coating weight of the solvent based adhesives is 2-3 lbs. (ca 0.9-1.4 kg)/ream at 25-35% application solids. The cure conditions for retort applications are typically 120-130°F (ca 49-54° C) for 3-5 days before retorting. The coating weight for the solventless type of adhesive is typically about 1.5 lbs. (0.68 kg)/ ream, and this type of adhesive needs approximately 14 days cure at room temperature prior to retorting.

The retortable package described above is designed to withstand the anticipated applied temperatures in the range of about 120° C. to 130° C. (250° F. to 265° F.) for 30 to 120 minutes without degradation. These are the temperatures and times typically needed to eliminate bacteria from food in a retort pouch depending on the size.

The foregoing description is intended to be general and non-limiting. Any retortable package known today or developed in the future can be used in the present invention, as the invention concerns the inks used to impart decoration or information on or in the package and the resulting structure.

In accordance with the present invention, a method of preparing a retort ink is provided. The retort ink is a combination of polyurethane binder, colorant and water or organic solvent, the polyurethane binder being selected on the basis of it having an enthalpic relaxation endotherm of 0.6 Joules/gram or less. The enthalpic relaxation of a material is evaluated using differential scanning calorimetry (DSC), which is a well-known technique. DSC testing was done on the bulk polymers and inks within the temperature range of -60°C to 180°C using the TA Instruments 2920 Modulated DSC operated in standard mode with open aluminum pans in an inert environment. A heating ramp of 10°C per minute was used.

Preferably, the strength is completely retained or increased upon retorting. The binder typically constitutes 15 to 50 wt.% of the ink, preferably about 25 to 30 wt.%, the colorant is about 0.25-40 wt. % of the ink on a dry weight basis and preferably about 6 to 30%, and the organic solvent or water is about 10 to 60 wt.% of the ink, preferably about 40 to 50 wt.%. In the organic solvent ink, the composition is preferably substantially non-aqueous and the binder is preferably a polyurethane which substantially free of carbodiimide moieties. In the water based ink, the binder is preferably a polyether based or polyester polyurethane or polyurethaneurea. Combinations of polyurethanes or combination with other binder resins such as acrylics can also be employed. When other binder resins are used, they preferably do not exceed about 50 % of the binder. The inks are preferably free of residual isocyanate, tin and HAPs (Hazardous Air Polutants).

The polyurethanes can be made by any of the processes known in the art and any such resin can be used as long as the desired pre- and post-retort strength is achieved and/or the enthalpic relaxation endotherm is 0.6 Joules/gram or less. It is preferred that the resin be free of peroxy carbamyl, aziridine, epoxy, oxazoline, carbodiimide or metal chelate entities.

The inks provide the heat stability to the retort package due to the binder polymer in their formulation. The polymer and resulting ink possess a unique thermal property that allows the ink to provide its heat resistance. This thermal property has an inverse correlation between the degree of internal relaxation and the post-retort lamination bonds. This relaxation can be estimated using the magnitude of the enthalpic relaxation endotherm expressed in Joules/gram. Polymers, such as most polyurethanes with a large enthalpic relaxation endotherm, showed a trend toward lower post-retort lamination bonds. Suitable polyurethanes for use in this invention have an enthalpic relaxation endotherm of 0.6 Joules/gram or less, and preferably less than 0.15 Joule/gram or less, following three days of aging at ambient temperature. The urethane polymers are the reaction product of an isocyanate and a polyol, and can contain other functional groups which modify the properties of the resin and the ink. It is not necessary, however, to use specialty polyurethanes such as those which contain carbodiimide moieties, etc, as long as the combination of binder and colorant is appropriately selected. The polyurethane is preferably a one-part product, i.e., it is a preformed reaction product without unreacted NCO groups. Two part systems in which the reactants have not yet been reacted require an isocyanate catalyst to achieve the high post-retort bonds. One benefit of the one part system is reduced ink waste because the leftover catalyzed material is not usable.

>

A unique property of this ink system is that it is highly resistant to rewetting by solventless laminating adhesives. Rewetting (also called resolubility or redispersibility) is a phenomenon whereby the adhesive dissolves the dried ink film causing poor printing appearance.

The ink of this invention has another unique characteristic in that it may be used in either flexographic or gravure printing by simply making minor adjustments to the formulation concentrations. Thus, the component concentrations may be adjusted for use in flexography or gravure printing. For example, a gravure ink preferably comprises about 8 to 60 wt.% of the binder, about 3 to 30 wt.% of the colorant and about 15 to 60 wt.% of organic solvent or water; whereas a flexographic ink comprises about 8 to 60 wt.% of the binder, about 3 to 30 wt. % of the colorant and about 15 to 60 wt. % of organic solvent or water. The ink preferably has a viscosity between about 15 seconds to 30 seconds, as measured in a #2 efflux cup. Efflux cup measurements are the conventional method for measuring ink viscosities and involves timing the flow of a calibrated quantity of ink through a calibrated orifice. The lower viscosity inks typically are used in gravure printing and the higher viscosity inks typically are used in flexographic printing. Thus, when the ink has a viscosity of about 28 seconds as measured in a #2 efflux cup, it is suitable for flexographic printing, and when the ink has a viscosity of about 18 seconds as measured in a #2 efflux cup, it is suitable for gravure printing.

The polyurethanes can be film forming upon removal of the organic solvent or water, or may be radiation curable. Unless formulated to be electron beam curable, the radiation curable compositions will frequently contain a photoinitiator.

The inks include a colorant in addition to the binder and solvent. The colorant can be one or more pigment or dye, or possibly a combination of them. The colorant may be organic or inorganic, and is selected to achieve at least the minimum pre-retort bond and post-retort bond strength when combined with the binder.

The most common pigments include azo dyes (for example, Solvent Yellow 14, Dispersed Yellow 23, and Metanil Yellow), anthraquinone dyes (for example, Solvent Red 111, Dispersed Violet 1, Solvent Blue 56, and Solvent Orange 3), xanthene dyes (Solvent Green 4, Acid Red 52, Basic Red 1, and Solvent Orange 63), azine dyes (for example, Jet Black), and the like.

Major usable organic pigments include diarylide yellow AAOT (for example, Pigment Yellow 14 CI#21095), diarylide yellow AAOA (for example, Pigment Yellow 12 CI#21090), Phthalocyanine Blue (for example, Pigment Blue 15), lithol red (for example, Pigment Red 52:1 CI#15860:1), toluidine red (for example, Pigment Red 22 CI#12315), dioxazine violet (for example, Pigment Violet 23 CI#51319), phthalocyanine green (for example, Pigment Green 7 CI#74260), phthalocyanine blue (for example, Pigment Blue 15 CI#74160), naphthoic acid red (for example, Pigment Red 48:2 C#15865:2).

Inorganic pigments include titanium dioxide (for example, Pigment White 6 CI#77891), carbon black (for example, Pigment Black 7 CI#77266), iron oxides (for example, red, yellow, and brown), ferric oxide black (for example, Pigment Black 11 CI#77499), chromium oxide (for example, green), ferric ammonium ferrocyanide (for example, blue), and the like.

The colorant is not limited to the foregoing and any colorant can be used as long as the desired retort bond strength is achieved. Thus, the colorant may be any conventional organic or inorganic pigment such as Zinc Sulfide, Pigment White 6, Pigment Yellow 1, Pigment Yellow 3, Pigment Yellow 12, Pigment Yellow 13, Pigment Yellow 14, Pigment Yellow 17, Pigment Yellow 63, Pigment Yellow 65, Pigment Yellow 73, Pigment Yellow 74, Pigment Yellow 75, Pigment Yellow 83, Pigment Yellow 97, Pigment Yellow 98, Pigment Yellow 106, Pigment Yellow 114, Pigment Yellow 121, Pigment Yellow 126, Pigment Yellow 127, Pigment Yellow 136, Pigment Yellow 174, Pigment Yellow 176, Pigment Yellow 188, Pigment Orange 5, Pigment Orange 13, Pigment Orange 16, Pigment Orange 34, Pigment Red 2, Pigment Red 9, Pigment Red 14, Pigment Red 17, Pigment Red 22, Pigment Red 23, Pigment Red 37, Pigment Red 38, Pigment Red 41, Pigment Red 42, Pigment Red 57, Pigment Red 112, Pigment Red 122, Pigment Red 170, Pigment Red 210, Pigment Red 238, Pigment Blue 15, Pigment Blue 15:1, Pigment Blue 15:2, Pigment Blue 15:3, Pigment Blue 15:4, Pigment Green 7, Pigment Green 36, Pigment. Violet 19, Pigment Violet 23, Pigment Black 7 and the like. The combination of binder and ink is selected so that the desired pre- and post-retort strength is achieved. The suitability of any particular combination can be easily determined by a simple screening test. It is applied to a sheet of the laminate on which the printing is desired, overcoated with the adhesive and laminated to another sheet, allowed to cure for 3 days at about 50°C and the bond strength determined. It is then retorted at 135°C for 45 minutes and the bond strength re-determined.

Any organic solvent for the polyurethane binder may be used when formulating the solvent based retort laminating inks of this invention. Useful organic solvents include ester solvents such as ethyl acetate or n-propyl acetate, aromatics such as toluene, ketones such as acetone, methyl ethyl ketone or methyl butyl ketone, alcohols, aliphatic hydrocarbons, or a polar solvent such as an ester/alcohol mixture. Any number of alcohol solvents maybe be used such as ethanol, butanol, n-propanol, isopropanol, glycols, and the like. When the colorant is a dye, the solvent should preferably dissolve the dye in addition to the binder. The solvent based inks of the present invention are substantially non-aqueous, i.e., they contain less than about 5% water, and preferably 2% water or less. The presence of a small amount of water is sometimes useful in maintaining fluidity during gravure printing.

The retort laminating inks may also contain the usual ink adjuvants to adjust flow, surface tension, and gloss of a cured coating or printed ink. Such adjuvants typically are polymeric dispersants, surface active agents, waxes, or a combination thereof. These adjuvants may function as leveling agents, wetting agents, fillers, dispersants, defrothers or deaerators, or additional adjuvants may be added to provide a specific function.

The lamination inks may contain a polymeric dispersant when the colorant is a pigment to disperse the pigment during mixing and grinding operations in the solvent. All components of the ink may be blended together and ground to reduce the pigment particles to the desired size distribution, typically 10 microns or less, or alternatively the pigment and the polymeric dispersant can be premixed and ground in the solvent to form a "base" which is subsequently blended with the remaining components of the ink composition. The ink components may be mixed in a high speed mixer until a slurry consistency is reached and then passed through a media mill until the pigment is reduced to 10 microns or smaller. The wide versatility of the inks of this invention allows them to be prepared without a polymeric dispersant, but preferably they are made with a polymeric dispersant for grinding in, for example, polyvinyl butyral or blending with, for instance, a nitrocellulose base. Thus, the ink of this invention may contain 0 to about 12 parts by weight of the polymeric dispersant.

Other useful colorants, organic solvents and adjuvants can be identified by consulting The Printing Ink Manual.

In order to further illustrate the invention, various non-limiting examples are provided below. In these, as throughout this specification and claims, all parts and percentages are by weight, all temperatures are in degrees Centigrade, and all bond strengths are in g/2.54 cm, unless otherwise specified.

Examples 1-4 describe the preparation of some polyurethanes useful in the present invention.

### Example 1:

A pre-polymer was prepare by combining

| | |
|---|---|
| polyTHF 2000* (BASF) | 42.00% |
| polyTHF 1000** (BASF) | 7.00% |
| Dimethylol Propionic Acid (DMPA) | 10.148% |
| Methoxypoly(oxyethylene/oxypropylene) -2-propylamine (MOEOPOPA) | 5.05% |
| Bismuth Catalyst | 0.002% |
| Isophorone diisocyanate (IPDI) (Degussa) | 35.80% |
| | 100.00% |

| | |
|---|---|
| * Poly(tetramethylene ether) glycol (mw= 2000) ** Poly(tetramethylene ether) glycol (mw= 1000) | |

Then, 31 parts of the pre-polymer were combined with 65.75 parts of water, 2 parts of ammonia (29%) and 1.25 parts of ethylene diamine.

### Example 2:

Example 1 is repeated using:

**Pre-polymer:**

| | |
|---|---|
| polyTHF 2000 | 47.00% |
| polyTHF 1000 | 9.40% |
| DMPA | 8.20% |
| IPDI | 35.40% |
| | 100.00% |
| | |
| water | 62.56% |
| ammonia 29% | 2.10% |
| Ethylene diamine | 1.44% |
| Pre-polymer | 33.90% |
| | 100.00% |

### Example 3:

Example 1 is repeated using:

**Pre-polymer:**

| | |
|---|---|
| polyTHF 1000 | 39.6% |
| DMPA | 10.4% |
| Polyether monoamine (mw ca. 1000; PO/EO ratio ca. 3/19) | 5.2% |
| m-Tetramethylene Xylene Diisocyanate (Cytec) | 44.8% |
| | 100.00% |
| | |
| water | 57.58% |
| ammonia | 2.15% |
| hydrazine (15.5%) (Olin) | 5.05% |
| pre-polymer | 35.22% |
| | 100.00% |

### Example 4:

Example 1 is repeated using:

| Pre-polymer: | |
|---|---|
| polyTHF 2000 | 52.00% |
| DMPA | 9.50% |
| MOEOPOPA | 4.80% |
| Bismuth catalyst | 0.002% |
| IPDI | 33.70% |
| | 100.00% |
| | |
| water | 65.90% |
| ammonia 29% | 2.00% |
| Ethylene diamine | 1.10% |
| Pre-polymer | 31.00% |
| | 100.00% |

Examples 5-9 illustrate the formula of some water-based inks prepared by dry grinding pigment in the urethanes and dispersant.

### Example 5:

| | |
|---|---|
| 18.00 | Cyan Blue |
| 71.70 | Polyester Based Polyurethane Solution/Dispersion (Neorez R-9330 from DSM Neoresins) |
| 5.00 | Polyether Based Polyurethane/Urea Resin Solution/Dispersion "A" (Sun Chemical; Mw 44,000; 200-350 cp viscosity; 35-37 % non-volatiles) |
| 2.00 | Dispersant (Dispe rbyk 190 from Byk-Chemie) |
| 0.50 | Defoamer (Dapro 975 from Daniel Products) |
| 2.80 | Water |
| 100.00 | |

### Example 6:

| | |
|---|---|
| 18.00 | Cyan blue |
| 43.60 | Polyether based polyurethane/urea resin solution/dispersion (Example 1 ) |
| 20.00 | Polyester based polyurethane dispersion/solution (Neorez 9330) |
| 8.00 | SMA(Half este r) SMA 17352H from Sartomer |
| 1.90 | Dispersing aid (Disperbyk 190) |
| 0.50 | Defoam er (Dapro 975) |
| 8.00 | Water |
| 100.00 | |

### Example 7 - Comparative blue ink

| | |
|---|---|
| 19.30 | Cyan Blue Pigment |
| 21.70 | Polyether based polyurethane/urea resin solution/dispersion "A" |
| 10.80 | Modified rosin ester solution (Sun Chemical; Mw 14,400; 0.5-2.0 poise viscosity; 25 % non-volatiles) |
| 9.30 | Acrylic resin solution (Rez 300 from Midwest Graphics) |
| 32.40 | Water |
| 2.20 | Propanol |
| 3.60 | Propylene glycol n-propyl ether |
| 0.50 | Surfactant (Surfynol 104 PA from Air Products) |
| 0.20 | Defoamer (Dapro 975) |
| 100.00 | |

### Example 8 - White ink

| | |
|---|---|
| 48.75 | Polyester based Polyurethane dispersion (Neorez R-9330) |
| 3.00 | Acrylic resin solution (Morcryl 132 from Rohm & Haas) |
| 1.00 | Surfactant (Surfynol 104 PA) |
| 0.25 | Defoamer (Dapro 975 from Daniel Products) |
| 2.00 | Water |
| 45.00 | TiO₂ |
| 100.00 | |

### Example 9 - Comparative white ink

| | |
|---|---|
| Polyether based polyurethane/urea resin solution/dispersion A | 32.5 |
| Modified rosin ester solution (TV94-5991) | 3.3 |
| N-Propanol | 7.0 |
| Defoamer (Nalco 2303 from Nalco) | 0.3 |
| Surfactant (Carbowet 2000 from Air Products) | 0.95 |
| TiO₂ | 42.00 |
| Water | 13.95 |
| | 100.00 |

### Example 10:

Prints were made using the inks of Examples 5-9 on chemically treated polyester film, corona treated polyester film, SiOx coated polyester film and adhesive laminated to cast polypropylene/aluminum foil using a retort adhesive. Prints were cured at 120° F for 5 days before testing for pre-retort bond strength. Then, the cured prints were subjected to retort testing in a retort chamber at about 122°C (252° F) at about 1.3-1.4 kgf/cm² (18-20 psi) for 30 minutes and tested for post-retort bond strength. In some cases, different colored inks were applied sequentially. The results are shown in the following Tables in which MOF means mode of failure; A/F means "Adhesive Failure" (the adhesive remains on either the ink (primary) substrate or the secondary substrate, but the substrates delaminate from each other); F/T means "Film Tear"; "Destruct" means that one or more of the substrates tore during the peel test (ASTM D903-98 ); :Decal means ink peeling away from the printed substrate to the secondary substrate; and "Ink split" means that the ink lost its cohesive bond during the peel test such that some ink remained on the primary substrate and some ink transferred to the secondary substrate, and the substrates delaminated from each other.

**Bond Strength to chemically treated polyester film**

| | Example 9 (White) | | Example 7 (Blue) | |
|---|---|---|---|---|
| Run | Pre-retort | Post-retort | Pre-retort | Post-retort |
| 1 | 267 | 22 | 323 | 16 |
| 2 | 295 | 15 | 370 | 15 |
| 3 | 251 | 20 | 323 | 17 |
| 4 | 307 | 20 | 347 | 22 |
| 5 | 281 | 22 | 351 | 18 |
| 6 | 315 | 17 | 362 | 16 |
| 7 | 271 | 15 | 328 | 19 |
| 8 | 302 | 19 | 367 | 20 |
| Mean | 286 | 18 | 346.37 | 17.87 |
| Std Dev | 22 | 2.8 | 19.5 | 2.3 |
| Mode of Failure | Ink Split | Decal | Ink Split | Decal |

**Bond Strength to Corona treated polyester film**

| | Example 9 (White) | | Example 7 (Blue) | |
|---|---|---|---|---|
| Run | Pre-retort Bonds | Post-Retort Bonds | Pre-retort bonds | Post-retort bonds |
| 1 | 64 | 15 | 227 | 24 |
| 2 | 67 | 24 | 149 | 34 |
| 3 | 95 | 11 | 192 | 25 |
| 4 | 91 | 15 | 203 | 25 |
| 5 | 93 | 10 | 325 | 31 |
| 6 | 128 | 20 | 357 | 38 |
| 7 | 67 | 35 | 200 | 42 |
| 8 | 68 | 16 | 265 | 27 |
| Mean | 84.1 | 18.25 | 239.75 | 30.75 |
| Std Dev | 22.10 | 8.1 | 70.9 | 6.7 |
| MOF | Decal | Decal | Decal | Decal |

**Bond Strength to coated polyester**

| | Example 9 (White) | | Example 7 (Blue) | |
|---|---|---|---|---|
| Run | Pre-retort Bonds | Post-Retort Bonds | Pre-retort Bonds | Post-retort Bonds |
| 1 | 301 | 41 | 143 | 24 |
| 2 | 317 | 41 | 155 | 34 |
| 3 | 221 | 57 | 128 | 72 |
| 4 | 294 | 42 | 146 | 42 |
| 5 | 273 | 41 | 114 | 25 |
| 6 | 255 | 84 | 115 | 25 |
| 7 | 314 | 61 | 192 | 31 |
| 8 | 277 | 101 | 135 | 38 |
| Mean | 281.5 | 58.5 | 139.75 | 36.37 |
| Std Dev | 32.3 | 22.85 | 22.3 | 15.8 |
| MOF | Split | Decal | Decal | Decal |

**Bond Strength to chemically treated polyester film**

| | Example 5 Blue | | Example 5 Blue backed by Example 8 white | |
|---|---|---|---|---|
| Run | Pre-retort | Post-retort | Pre-retort | Post-retort |
| 1 | 703 | 959 | 642 | 1155 |
| 2 | 630 | 920 | 541 | 865 |
| 3 | 709 | 932 | 661 | 1254 |
| 4 | 569 | 1158 | 615 | 1125 |
| 5 | 715 | 979 | 657 | 905 |
| 6 | 625 | 935 | 571 | 1165 |
| 7 | 719 | 946 | 647 | 993 |
| 8 | 572 | 1020 | 627 | 1050 |
| Mean | 655.25 | 981.12 | 620.12 | 1064 |
| Std Dev | 64.05 | 78.19 | 43.05 | 135.4 |
| MOF | A/F | Destruct | A/F | Destruct |

**Bond Strength to Corona treated polyester film**

| | Example 5 Blue | | Example 5 Blue/backed by Example 8 White | |
|---|---|---|---|---|
| Run | Pre-retort Bonds | Post-Retort Bonds | Pre-retort Bonds | Post-retort Bonds |
| 1 | 700 | 858 | 752 | 830 |
| 2 | 688 | 719 | 705 | 832 |
| 3 | 989 | 1060 | 817 | 960 |
| 4 | 671 | 1020 | 689 | 960 |
| 5 | 798 | 901 | 658 | 671 |
| 6 | 783 | 864 | 796 | 857 |
| 7 | 870 | 821 | 791 | 897 |
| 8 | 909 | 887 | 720 | 848 |
| Mean | 801 | 891.25 | 741 | 856.875 |
| Std Dev | 114.62 | 107.98 | 57.01 | 91.68 |
| MOF | F/T | F/T | A/F-F/T | F/T |

**Bond Strength to SiOx coated polyester**

| | Example 5 Blue | | Example 5 Blue backed by Example 8 White | |
|---|---|---|---|---|
| Run | Pre-retort Bonds | Post-Retort Bonds | Pre-retort Bonds | Post-retort Bonds |
| 1 | 556 | 657 | 617 | 678 |
| 2 | 481 | 761 | 583 | 720 |
| 3 | 487 | 673 | 576 | 721 |
| 4 | 503 | 652 | 604 | 680 |
| 5 | 537 | 755 | 647 | 724 |
| 6 | 578 | 762 | 620 | 678 |
| 7 | 568 | 728 | 670 | 691 |
| 8 | 566 | 628 | 631 | 770 |
| Mean | 534.5 | 702 | 618.5 | 707.75 |
| Std Dev | 38.88 | 55.30 | 31.40 | 32.26 |
| MOF | A/F-F/T | F/T | A/F-F/T | A/F |

**Bond Strength to chemically treated polyester film**

| | Example 5 Blue backed by Example 8 White | | Example-2 Blue | |
|---|---|---|---|---|
| Run | Pre-retort Bonds | Post-Retort Bonds | Pre-retort Bonds | Post-retort Bonds |
| 1 | 832 | 500 | 736 | 464 |
| 2 | 701 | 478 | 726 | 890 |
| 3 | 791 | 483 | 808 | 492 |
| 4 | 679 | 491 | 655 | 594 |
| 5 | 835 | 674 | 835 | 906 |
| 6 | 637 | 574 | 749 | 770 |
| 7 | 798 | 745 | 738 | 573 |
| 8 | 832 | 717 | 901 | 466 |
| Mean | 763.12 | 582.75 | 768.5 | 644.37 |
| Std Dev | 78.82 | 112.71 | 76.15 | 185.07 |
| MOF | A/F-F/T | A/F-F/T | F/T-A/F | F/T-Split |

**Bond Strength to Corona treated polyester film**

| | Example 6 Blue | | Example 6 Blue/backed by Example 8 White | |
|---|---|---|---|---|
| Run | Pre-retort Bonds | Post-Retort Bonds | Pre-retort Bonds | Post-retort Bonds |
| 1 | 685 | 813 | 720 | 666 |
| 2 | 773 | 741 | 586 | 635 |
| 3 | 790 | 1132 | 738 | 842 |
| 4 | 625 | 977 | 744 | 823 |
| 5 | 785 | 604 | 714 | 891 |
| 6 | 696 | 859 | 766 | 897 |
| 7 | 733 | 1081 | 667 | 796 |
| 8 | 685 | 697 | 715 | 717 |
| Mean | 721.5 | 863 | 706.25 | 783.37 |
| Std Dev | 58.71 | 187.05 | 56.47 | 99.89 |
| MOF | A/F-F/T | F/T | A/F-F/T | F/T-A/F |

**Bond Strength to SiOx coated polyester**

| | Example 6 Blue | | Example 6 Blue backed by Example 8 White | |
|---|---|---|---|---|
| Run | Pre-retort Bonds | Post-Retort Bonds | Pre-retort Bonds | Post-retort Bonds |
| 1 | 541 | 813 | 623 | 728 |
| 2 | 558 | 741 | 625 | 827 |
| 3 | 549 | 887 | 645 | 842 |
| 4 | 528 | 977 | 637 | 823 |
| 5 | 523 | 604 | 637 | 891 |
| 6 | 470 | 859 | 643 | 897 |
| 7 | 565 | 850 | 628 | 796 |
| 8 | 557 | 697 | 502 | 717 |
| Mean | 536.375 | 803.5 | 617.5 | 815.12 |
| Std Dev | 30.58 | 117.99 | 47.361 | 66.51 |
| MOF | A/F-F/T | F/T | A/F-F/T | F/T-A/F |

In the following testing examples and unless otherwise indicated, inks were printed on SP93™ , a chemically treated PET film, using either a gravure or flexographic method. A commercially available solvent based urethane adhesive was applied at 3 lbs. (1.4 kg)/ream to the printed film as specified by the manufacturer. An aluminum foil (pre- or post-laminated with cast polypropylene) was then laminated to the printed web and allowed to cure for 5 days in a 49°C oven, at which time the laminates were tested for pre-retort bonds. After being retorted in an autoclave at 135°C for 45 minutes, the laminates were retested. The values for bond strength according to ASTM D 1876 are in g/2.54 cm and the bond character (destruct, adhesive failure or ink split) was noted. The retort polyurethanes in the formulations had an enthalpic relaxation endotherm of 0.6 Joules/gram or less and were the reaction product of IPDI and poly(tetramethylene ether) glycol, 1,4-butanediol, DMPA and ethylene diamine.

In the following formulations, retort polyurethane B had a Mw of 18,500 (vs. polystyrene by GPC), a viscosity of 1242 cp and a non-volatile content of 32.6% while retort polyurethane C had a Mw of 22.200, a viscosity of 546 cp and a non-volatile content of 31.8%. Retort polyurethane B was prepared by reacting 347 parts poly(tetramethylene ether) glycol 2000,69 parts poly(tetramethylene ether) glycol 1000, 5 parts 1,4-butanediol, and 5 parts DMPA with 262 parts IPDI in propyl acetate, and then reacting 570 parts of the resulting product with 23 parts of ethylene diamine in propanol. Retort polyurethane C was prepared by reacting 259 parts poly(tetramethylene ether) glycol 2000, 43 parts poly(tetramethylene ether) glycol 1000, 11 parts 1,4-butanediol and 2 parts DMPA with 105 parts IPDI in propyl acetate, and then reacting 570 parts of the resulting product with 9 parts of ethylene diamine in propanol.

**Red:**

| | |
|---|---|
| 21.9% | retort polyurethane resin solution C |
| 21.9% | retort polyurethane resin solution B |
| 33.1% | ethanol |
| 6% | Dowanol DPM (Dow Chemical Co.) |
| 2% | water |
| 0.6% | methylene disalicylic acid (Chemicals Inc.) |
| 0.5% | calcium carbonate |
| 14% | Pigment Red 52:1 |

**Blue**

| | |
|---|---|
| 48% | retort polyurethane resin solution C |
| 25% | ethanol |
| 5% | n-propanol |
| 6% | Dowanol DPM |
| 2% | water |
| 14% | Pigment Blue 15:4 |

**Black**

| | |
|---|---|
| 50% | retort polyurethane resin solution B |
| 5% | PVB solution (25%Mowital B20H [Kuraray America, Inc.] in ethanol) |
| 26% | ethanol |
| 6% | Dowanol DPM |
| 13% | Pigment Black 7 |

**Yellow:**

| | |
|---|---|
| 45% | retort polyurethane resin solution C |
| 32.3% | ethanol |
| 6% | Dowanol DPM |
| 2% | water |
| 0.2% | methylene disalicylic acid (Chemicals Inc.) |
| 2.5% | calcium carbonate (Mississippi Lime Co.) |
| 12% | Pigment Yellow 14 |

**HR Yellow:**

| | |
|---|---|
| 25% | retort polyurethane resin solution C |
| 64% | ethanol |
| 1% | calcium carbonate (Mississippi Lime Co.) |
| 10% | Pigment Yellow 83 |

**Y/S Naphthol:**

| | |
|---|---|
| 37.5% | retort polyurethane resin solution C |
| 50.5% | ethanol |
| 12% | Pigment Red 22 |

**Orange:**

| | |
|---|---|
| 37% | retort polyurethane resin solution C |
| 39% | ethanol |
| 3% | Dowanol DPM |
| 5% | PVB solution (25% Mowital B20H in ethanol) |
| 14% | Pigment Orange 34 |
| 2% | water |

**Green:**

| | |
|---|---|
| 49.7% | retort polyurethane resin solution C |
| 26.8% | ethanol |
| 6% | Dowanol DPM |
| 2% | water |
| 15.5% | Pigment Green 7 |

**White:**

| | |
|---|---|
| 34% | retort polyurethane resin solution C |
| 2.5% | polyurethane resin solution (Sun Chemical PU-940-1133) |
| 15% | n-propanol |
| 2.5% | epoxy resin (EPOTUF EA-6891 from Reichold) |
| 15% | n-propyl acetate |
| 31% | TiO₂ |

### Example 11:

The adhesive used was UR2780/5891™ from Liofol. A prelaminated aluminum foil/cast polypropylene was the secondary substrate and was applied with the foil side laminated to the dried ink image.

| Ink | Pre retort bond strength | Post retort bond strength | % change in bond value after retort Or character |
|---|---|---|---|
| Red | 834 adhesive failure | DESTRUCT | DESTRUCT |
| Cyan | 843 adhesive failure | DESTRUCT | DESTRUCT |
| Black | 897 adhesive failure | DESTRUCT | DESTRUCT |
| YS Naphthol | DESTRUCT | DESTRUCT | DESTRUCT |
| Orange | DESTRUCT | DESTRUCT | DESTRUCT |
| Green | 896 adhesive failure | DESTRUCT | DESTRUCT |
| White | 704 adhesive failure | DESTRUCT | DESTRUCT |
| Red/ White | 824 adhesive failure | DESTRUCT | DESTRUCT |
| Cyan/ White | 806 adhesive failure | DESTRUCT | DESTRUCT |
| Black/ White | 831 adhesive failure | DESTRUCT | DESTRUCT |
| YS Naphthol/ White | DESTRUCT | DESTRUCT | DESTRUCT |
| Orange/ White | 802 adhesive failure | DESTRUCT | DESTRUCT |
| Green/ White | 796 adhesive failure | DESTRUCT | DESTRUCT |

### Example 12:

The procedure of Example 11 was used except that Adcote 250HV/C-86 from Rohm and Haas was used as the adhesive.

| Ink | Pre | Post | % change in bond value after retort or character |
|---|---|---|---|
| Yellow | 1130 adhesive failure | 1004 ink split | 89% |
| Red | DESTRUCT | DESTRUCT | DESTRUCT |
| Cyan | 1260 adhesive failure | 1239 adhesive failure | 98% |
| Black | DESTRUCT | DESTRUCT | DESTRUCT |
| HR Yellow | 922 ink split | DESTRUCT | DESTRUCT |
| YS Naphthol | DESTRUCT | DESTRUCT | DESTRUCT |
| Orange | 1123 adhesive failure | DESTRUCT | DESTRUCT |
| Green | 1142 adhesive failure | DESTRUCT | DESTRUCT |
| White | 1451 adhesive failure | DESTRUCT | DESTRUCT |
| Yellow/ White | DESTRUCT | DESTRUCT | DESTRUCT |
| Red/ White | DESTRUCT | DESTRUCT | DESTRUCT |
| Cyan/ White | 1247 adhesive failure | DESTRUCT | DESTRUCT |
| Black/ White | DESTRUCT | DESTRUCT | DESTRUCT |
| HR Yellow/ White | 843 ink split | DESTRUCT | DESTRUCT |
| YS Naphthol/ White | DESTRUCT | DESTRUCT | DESTRUCT |
| Orange/ White | 1167 adhesive failure | DESTRUCT | DESTRUCT |
| Green/ White | DESTRUCT | DESTRUCT | DESTRUCT |

### Example 13:

The procedure of Example 11 was used except that Adcote 812/811b from Rohm and Haas was used as the adhesive

| Ink | Pre | Post | % change in bond value after retort or character |
|---|---|---|---|
| Yellow | DESTRUCT | DESTRUCT | DESTRUCT |
| Red | DESTRUCT | DESTRUCT | DESTRUCT |
| Cyan | adhesive failure | DESTRUCT | DESTRUCT |
| Black | DESTRUCT | DESTRUCT | DESTRUCT |
| HR Yellow | 1330 adhesive failure | DESTRUCT | DESTRUCT |
| YS Naphthol | 845 adhesive failure | 1070 adhesive failure | 126% |
| Orange | DESTRUCT | 1099 adhesive failure | 132% |
| Green | DESTRUCT | 1041 adhesive failure | 140% |
| White | DESTRUCT | DESTRUCT | DESTRUCT |
| Yellow/ White | DESTRUCT | DESTRUCT | DESTRUCT |
| Red/ White | DESTRUCT | DESTRUCT | DESTRUCT |
| Cyan/ White | 7410 adhesive failure | DESTRUCT | DESTRUCT |
| Black/ White | DESTRUCT | DESTRUCT | DESTRUCT |
| HR Yellow/ White | 817 adhesive failure | DESTRUCT | DESTRUCT |
| YS Naphthol/ White | 845 adhesive failure | 1070 adhesive failure | 127% |
| Orange/ White | DESTRUCT | DESTRUCT | DESTRUCT |
| Green/ White | DESTRUCT | DESTRUCT | DESTRUCT |

### Example 14:

In this test, the inks were printed on AlOx coated PET, the adhesive used was solvent based Liofol UR2780/5891™ and nylon was substituted for the foil.

| Ink | Pre | Post | % change in bond value after retort or character |
|---|---|---|---|
| Yellow | DESTRUCT | DESTRUCT | DESTRUCT |
| Red | DESTRUCT | DESTRUCT | DESTRUCT |
| Cyan | DESTRUCT | DESTRUCT | DESTRUCT |
| Black | DESTRUCT | DESTRUCT | DESTRUCT |
| HR Yellow | 602 ink split | DESTRUCT | DESTRUCT |
| YS Naphthol | DESTRUCT | DESTRUCT | DESTRUCT |
| Orange | DESTRUCT | DESTRUCT | DESTRUCT |
| Green | DESTRUCT | DESTRUCT | DESTRUCT |
| White | DESTRUCT | DESTRUCT | DESTRUCT |
| Yellow/ White | DESTRUCT | DESTRUCT | DESTRUCT |
| Red/ White | DESTRUCT | DESTRUCT | DESTRUCT |
| Cyan/ White | DESTRUCT | DESTRUCT | DESTRUCT |
| Black/ White | DESTRUCT | DESTRUCT | DESTRUCT |
| HR Yellow/ White | DESTRUCT | DESTRUCT | DESTRUCT |
| YS Naphthol/ White | DESTRUCT | DESTRUCT | DESTRUCT |
| Orange/ White | DESTRUCT | DESTRUCT | DESTRUCT |
| Green/ White | DESTRUCT | DESTRUCT | DESTRUCT |

### Example 15:

The inks were printed on AlOx coated PET and laminated to nylon using a solventless adhesive from Rohm and Haas Mor-Free 225C/C-33™

| Ink | Pre | Post | % change in bond value after retort or character |
|---|---|---|---|
| Yellow | DESTRUCT | DESTRUCT | DESTRUCT |
| Red | DESTRUCT | DESTRUCT | DESTRUCT |
| Cyan | DESTRUCT | DESTRUCT | DESTRUCT |
| Black | 264 adhesive failure | DESTRUCT | DESTRUCT |
| HR Yellow | 531 adhesive failure | DESTRUCT | DESTRUCT |
| YS Naphthol | DESTRUCT | DESTRUCT | DESTRUCT |
| Orange | DESTRUCT | DESTRUCT | DESTRUCT |
| Green | DESTRUCT | DESTRUCT | DESTRUCT |
| White | DESTRUCT | DESTRUCT | DESTRUCT |
| Yellow/ White | 336 adhesive failure | DESTRUCT | DESTRUCT |
| Red/ White | 353 adhesive failure | DESTRUCT | DESTRUCT |
| Cyan/ White | 304 adhesive failure | DESTRUCT | DESTRUCT |
| Black/ White | 259 adhesive failure | 402 adhesive failure | 155% |
| HR Yellow/ White | DESTRUCT | DESTRUCT | DESTRUCT |
| YS Naphthol/ White | DESTRUCT | DESTRUCT | DESTRUCT |
| Orange/ White | DESTRUCT | DESTRUCT | DESTRUCT |
| Green/White | DESTRUCT | DESTRUCT | DESTRUCT |

### Example 16:

The inks were printed on SiOx coated PET and laminated to nylon using a solvent based adhesive from Rohm and Haas Adcote 812/811b™.

| Ink | Pre | Post | % change in bond value after retort or character |
|---|---|---|---|
| Yellow | DESTRUCT | DESTRUCT | DESTRUCT |
| Red | DESTRUCT | DESTRUCT | DESTRUCT |
| Cyan | DESTRUCT | DESTRUCT | DESTRUCT |
| Black | DESTRUCT | DESTRUCT | DESTRUCT |
| HR Yellow | 844 adhesive failure | DESTRUCT | DESTRUCT |
| YS Naphthol | DESTRUCT | DESTRUCT | DESTRUCT |
| Orange | DESTRUCT | DESTRUCT | DESTRUCT |
| Green | DESTRUCT | DESTRUCT | DESTRUCT |
| White | DESTRUCT | DESTRUCT | DESTRUCT |
| Yellow/ White | 690 adhesive failure | DESTRUCT | DESTRUCT |
| Red/ White | DESTRUCT | DESTRUCT | DESTRUCT |
| Cyan/ White | DESTRUCT | DESTRUCT | DESTRUCT |
| Black/ White | DESTRUCT | DESTRUCT | DESTRUCT |
| HR Yellow/ White | DESTRUCT | adhesive failure | 198% |
| YS Naphthol/ White | DESTRUCT | DESTRUCT | DESTRUCT |
| Orange/ White | DESTRUCT | DESTRUCT | DESTRUCT |
| Green/ White | DESTRUCT | DESTRUCT | DESTRUCT |

### Example 17:

The inks were printed on SiOx coated PET and laminated to a nylon using a solventless adhesive from Liofol Tycel 7991/6093™.

| Ink | Pre | Post | % change in bond value after retort |
|---|---|---|---|
| Yellow | DESTRUCT | DESTRUCT | DESTRUCT |
| Red | DESTRUCT | DESTRUCT | DESTRUCT |
| Cyan | DESTRUCT | DESTRUCT | DESTRUCT |
| Black | DESTRUCT | DESTRUCT | DESTRUCT |
| HR Yellow | DESTRUCT | DESTRUCT | DESTRUCT |
| YS Naphthol | DESTRUCT | DESTRUCT | DESTRUCT |
| Orange | DESTRUCT | DESTRUCT | DESTRUCT |
| Green | DESTRUCT | DESTRUCT | DESTRUCT |
| White | DESTRUCT | DESTRUCT | DESTRUCT |
| Yellow/ White | DESTRUCT | DESTRUCT | DESTRUCT |
| Red/ White | DESTRUCT | DESTRUCT | DESTRUCT |
| Cyan/ White | DESTRUCT | DESTRUCT | DESTRUCT |
| Black/ White | DESTRUCT | DESTRUCT | DESTRUCT |
| HR Yellow/ White | DESTRUCT | DESTRUCT | DESTRUCT |
| YS Naphthol/ White | DESTRUCT | DESTRUCT | DESTRUCT |
| Orange/ White | DESTRUCT | DESTRUCT | DESTRUCT |
| Green/ White | DESTRUCT | DESTRUCT | DESTRUCT |

### Example 18:

This example compares the % of pre-retort bonds maintained after retorting and the magnitude of the enthalpic relaxation endotherm on two different lamination ply combinations. The blue formulation set forth above was used except that in the comparative ink a nonretort polyurethane (PU 940-1071) was employed.

| | Substrate - chemically treated polyester laminated to foil | | | | |
|---|---|---|---|---|---|
| | Pre-retort Bond Integrity of ink (g/2.54 cm) | Post-retort bond integrity of ink (g/2.54 cm) | Percent of pre-retort bonds after heat treating | Ink Endotherm (J/g) | Resin Endotherm (J/g) |
| Comparative lamination ink | 890 | 231 | 24% | 10.1-13.2 | 0.75 |
| Blue retort lamination ink | 593 | 809 | 136% | 0.0 | 0.0 |

| | Substrate - corona treated polyester laminated to foil | | | | |
|---|---|---|---|---|---|
| Comparative lamination ink | 907 | 117 | 13% | 10.1-13.2 | 0.75 |
| Blue retort lamination ink | 630 | 687 | 109% | 0.0 | 0.0 |

Although the invention has been described and illustrated with respect to exemplary embodiments thereof, it should be understood by those skilled in the art that the foregoing and various other changes, omissions, and additions may be made therein and thereto, without departing from the spirit and scope of the present invention.

## Claims

1. A method for preparing a retort ink, comprising:
selecting a polyurethane binder on the basis of the polyurethane having an enthalpic relaxation endotherm of 0.6 J/g or less after 3 days of aging at ambient temperature as measured using differential scanning calorimetry within a temperature range of -60°C to 180°C using open aluminum pans in an inert environment and a heating ramp of 10°C per minute; and
combining the polyurethane binder, a colorant and a carrier to produce a retort ink.

2. The method of claim 1, wherein the polyurethane is a polyurethane substantially free of carbodiimide moieties, a polyether polyurethane, a polyester polyurethane or a polyurethane urea.

3. The method of claims 1 or 2 in which the carrier is an organic solvent and the ink is substantially non-aqueous.

4. The method of claims 1 or 2 in which the carrier is water.

5. The method of claim 4 in which the carrier is water and the binder is a polyether or polyester polyurethane or polyurethaneurea.

6. The method of any one of claims 1 to 5 in which the colorant is a pigment or a dye.

7. A method of preparing a printed laminate comprising preparing a retort ink by the method of any one of claims 1 to 6; and
printing the retort ink on at least a part of a surface of a laminate to produce a printed laminate.

8. A method of preparing a retort package comprising a container of laminated material, in which the method comprises preparing at least one ply of the laminate by the method of claim 7.

9. The method of preparing the printed laminate of claim 7 or the retort package of claim 8 in which the surface on which the ink is printed comprises polypropylene.

10. Use of a polyurethane binder selected on the basis of it having an enthalpic relaxation endotherm of 0.6 J/g or less after 3 days of aging at ambient temperature as measured using differential scanning calorimetry within a temperature range of -60°C to 180°C using open aluminum pans in an inert environment and a heating ramp of 10°C per minute as a constituent of a retort ink containing a colorant and a carrier to enhance the heat resistance properties of the ink.

11. The use of claim 10, wherein the polyurethane binder is a polyurethane substantially free of carbodiimide moieties, a polyether polyurethane, a polyester polyurethane or a polyurethane urea.

12. The use of claim 10 or claim 11 to provide an ink that when cured that has a bond strength to a layer of retort material of at least about 500 g/2.54 cm before retorting and after retorting either the a bond strength of at least about 375 g/2.54 cm or destruct strength.

## Patentansprüche

1. Verfahren zum Vorbereiten einer Retorte-Tinte, umfassend:
Auswählen eines Polyurethan-Bindemittels auf Basis eines Polyurethans mit einer Enthalpie-Relaxation-Endotherme von 0,6 J/g oder weniger nach drei Alterungstagen bei Umgebungstemperatur, gemessen unter Verwendung einer Differential-Scanning-Kalorimetrie innerhalb eines Temperaturbereiches von -60 °C bis 180 °C unter Verwendung von offenen Aluminiumpfannen in einer inerten Umgebung und einer Erwärumgsrate von 10 °C pro Minute; und
Zusammenfügen des Polyurethan-Bindemittels, eines Färbemittels und eines Trägermittels, um eine Retorte-Tinte herzustellen.

2. Verfahren nach Anspruch 1, bei welchem das Polyurethan ein Polyurethan, welches im Wesentlichen frei von Carbodiimid-Anteilen ist, ein Polyether-Polyurethan, ein Polyester-Polyurethan oder ein Polyurethan-Harnstoff ist.

3. Verfahren nach Anspruch 1 oder 2, bei welchem das Trägermittel ein organisches Lösemittel ist und die Tinte im Wesentlichen nicht-wässerig ist.

4. Verfahren nach Anspruch 1 oder 2, bei welchem das Trägermittel Wasser ist.

5. Verfahren nach Anspruch 4, bei welchem das Trägermittel Wasser ist und das Bindemittel ein Polyether oder Polyester-Polyurethan oder Polyurethan-Harnstoff ist.

6. Verfahren nach einem der Ansprüche 1 bis 5, bei welchem der Farbstoff ein Pigment oder ein Farbstoff ist.

7. Verfahren zum Vorbereiten eines gedruckten Laminats, welches das Vorbereiten von einer Retorte-Tinte durch das Verfahren nach einem der Ansprüche 1 bis 6 umfasst; und
Drucken der Retorte-Tinte auf wenigstens einen Abschnitt einer Fläche von einem Laminat, um ein gedrucktes Laminat herzustellen.

8. Verfahren zum Vorbereiten einer Retorte-Verpackung, umfassend ein Behältnis aus einem laminierten Material, wobei das Verfahren das Vorbereiten von wenigstens einer Lage des Laminats durch das Verfahren nach Anspruch 7 umfasst.

9. Verfahren zum Vorbereiten des gedruckten Laminats nach Anspruch 7 oder der Retorte-Verpackung nach Anspruch 8, wobei die Fläche, auf welche die Tinte gedruckt wird, Polypropylen umfasst.

10. Verwendung von einem Polyurethan-Bindemittel, welches auf jener Basis ausgewählt ist, dass es eine Enthalpie-Relaxation-Endotherme von 0,6 J/g oder weniger nach drei Alterungstagen bei Umgebungstemperatur hat, gemessen unter Verwendung von einer Differential-Scanning-Kalorimetrie innerhalb eines Temperaturbereiches von -60 °C bis 180 °C unter Verwendung von offenen Aluminiumpfannen in einer inerten Umgebung und einer Erwärumgsrate von 10 °C pro Minute, als ein Bestandteil von einer Retorte-Tinte, welche ein Färbemittel und ein Trägermittel umfasst, um die Wärmewiderstandseigenschaften der Tinte zu verbessern.

11. Verwendung nach Anspruch 10, wobei das Polyurethan-Bindemittel ein Polyurethan, welches im Wesentlichen frei von Carbodiimid-Anteilen ist, ein Polyether-Polyurethan, ein Polyester-Polyurethan oder ein Polyurethan-Harnstoff ist.

12. Verwendung nach Anspruch 10 oder 11 zum Bereitstellen von einer Tinte, welche, sobald ausgehärtet, eine Bindungsfestigkeit an eine Schicht aus Retorte-Material von wenigstens ungefähr 500 g/2,54 cm vor Entstehen der Retorte hat, und nach Entstehen der Retorte eine Bindungsfestigkeit von wenigstens ungefähr 375 g/2,54 cm oder eine Destruktions-Festigkeit hat.

## Revendications

1. Procédé pour préparer une encre stérilisable, comprenant :
la sélection d'un liant de polyuréthane sur la base du polyuréthane ayant un endotherme de relaxation enthalpique de 0,6 J/g ou moins après 3 jours de vieillissement à température ambiante lorsque mesuré en utilisant une calorimétrie à balayage différentiel sur un intervalle de température de - 60 °C à 180 °C en utilisant des nacelles ouvertes en aluminium dans un environnement inerte et une rampe de chauffage de 10 °C par minute ; et
la combinaison du liant de polyuréthane, d'un colorant et d'un support pour produire une encre stérilisable.

2. Procédé selon la revendication 1, dans lequel le polyuréthane est un polyuréthane sensiblement exempt de groupements carbodiimide, un polyéther polyuréthane, un polyester polyuréthane ou une polyuréthane-urée.

3. Procédé selon les revendications 1 ou 2, dans lequel le support est un solvant organique et l'encre est essentiellement non aqueuse.

4. Procédé selon les revendications 1 ou 2, dans lequel le support est l'eau.

5. Procédé selon la revendication 4, dans lequel le support est l'eau et le liant est un polyéther ou polyester polyuréthane ou un polyuréthane-urée.

6. Procédé selon l'une quelconque des revendications 1 à 5, dans lequel le colorant est un pigment ou une teinture.

7. Procédé de préparation d'un laminé imprimé comprenant la préparation d'une encre stérilisable par le procédé selon l'une quelconque des revendications 1 à 6 ;
et
l'impression de l'encre stérilisable sur au moins une partie d'une surface d'un laminé pour produire un laminé imprimé.

8. Procédé de préparation d'un emballage stérilisable comprenant un récipient en matière laminée, dans lequel le procédé comprend la préparation d'au moins un pli du laminé par le procédé de la revendication 7.

9. Procédé de préparation du laminé imprimé de la revendication 7 ou de l'emballage stérilisable de la revendication 8, dans lequel la surface sur laquelle l'encre est imprimée comprend du polypropylène.

10. Utilisation d'un liant de polyuréthane sélectionné sur la base qu'il a un endotherme de relaxation enthalpique de 0,6 J/g ou moins après 3 jours de vieillissement à température ambiante lorsque mesuré en utilisant une calorimétrie à balayage différentiel sur un intervalle de température de - 60 °C à 180 °C en utilisant des nacelles en aluminium ouvertes dans un environnement inerte et une rampe de chauffage de 10 °C par minute, comme un constituant d'une encre stérilisable contenant un colorant et un support pour améliorer les propriétés de résistance thermique de l'encre.

11. Utilisation selon la revendication 10, dans laquelle le liant de polyuréthane est un polyuréthane sensiblement exempt de groupemements carbodiimide, un polyéther polyuréthane, un polyester polyuréthane ou un polyuréthane-urée.

12. Utilisation selon la revendication 10 ou la revendication 11 pour fournir une encre qui, lorsqu'elle a durci, a une résistance d'adhésion à une couche de matière stérilisable d'au moins environ 500 g/2,54 cm avant stérilisation, et après stérilisation soit une résistance d'adhésion d'au moins environ 375 g/2,54 cm soit une résistance à la destruction.
